# EUROPEAN PATENT APPLICATION

(11) **EP 0 663 144 A1**
(43) Date of publication of application: **19.07.1995**
(21) Application number: 94308893.0
(22) Date of filing: 30.11.1994
(51) Int. Cl.: A01D 34/73, A01D 34/68

(54) **Cutter blade**

(30) Priority: 17.01.1994 GB 9400777
(71) Applicant: ELECTROLUX OUTDOOR PRODUCTS LIMITED, Newton Aycliffe, Co Durham DL5 6UP (GB)
(72) Inventor: Gobin, Barry, Spennymoor, Co. Durham DL1 6SA (GB)
(74) Representative: Arthur, Bryan Edward

(57) **Abstract**

This invention relates to a cutter blade particularly for use with a rotary lawn mower and comprising a cutting layer (2) having at least one cutting edge (11) and at least one support layer (3) bonded to a major face of the cutting layer (2).

## Description

This invention relates to a cutter blade. In particular, a cutter blade in accordance with this invention is designed for use with a rotary lawn mower. Such lawn mowers may include one or more so called "swingback" blades pivotally mounted on a rotatable disc component. A cutter blade in accordance with the present invention may also be used to replace a cutting line or cord of a conventional line trimming machine for trimming lawn edges and grass which grows around bases of trees and shrubs and which cannot be cut using conventional lawn mowers.

Cutter blades for use with rotary lawn mowers can be divided into three categories.

A first and most common category of blade is in the form of a bar which is mounted for rotation about a central position of the blade. Such cutter bars are normally constructed from metal formed with one or more cutting edges which are not infrequently damaged by hard objects such as stones with which, in use, they collide.

The second category of blade commonly used in lawn mowers is the "swingback" blade and a plurality of such blades are usually pivotally mounted on a rotatably driven component such as, a disc. In operation, the disc is rotated at high angular velocity and the blades are, consequently, held pointing radially outwardly from the disc by centrifugal action. Although such blades are damaged more easily than bar blades they are both less expensive to manufacture and more easily replaceable. A further drawback with swingback blades is that since they are usually made from a plastics material their working life is relatively short. Again if a plastic blade collides with a hard object, the blade will become damaged and, thereafter, will be less effective.

The third category of cutting blade is in the form of a filament and is often used in trimming machines in which a motor causes rotation of a filament at high angular velocity. The filament is usually made of nylon, and is readily replaceable. However, such filaments are too flexible to be used over a large diameter of cut such as is required in a normal rotary lawn mower.

It is an object of this invention to overcome, or at least reduce, the abovementioned disadvantages.

According to one aspect of the invention a laminated cutter blade comprises a cutting layer having at least one cutting edge and at least one support layer bonded to a major surface of the cutting layer.

According to another aspect of the invention a laminated cutter blade comprises a cutting layer having at least one cutting edge and a support layer bonded to each major face of the cutting layer. Preferably, the cutting edge extends outwardly beyond a corresponding edge of the or each support layer. Conveniently, the cutting edge is aligned with a corresponding edge or edges of the or each support layer. In one embodiment of the invention, cutting blades are mountable for rotation on a driving member of a lawn mower and at a position displaced from the axis of rotation of the driving member whereby, in operation, the cutter blades is maintained a position substantially radially with respect to the axis of rotation.

In another embodiment of the invention the cutting layer comprises a plurality of segments which are connected together by joint portions of lesser width than the overall width of the blade.

The invention also includes a mower having at least one laminated cutting blade as herein described.

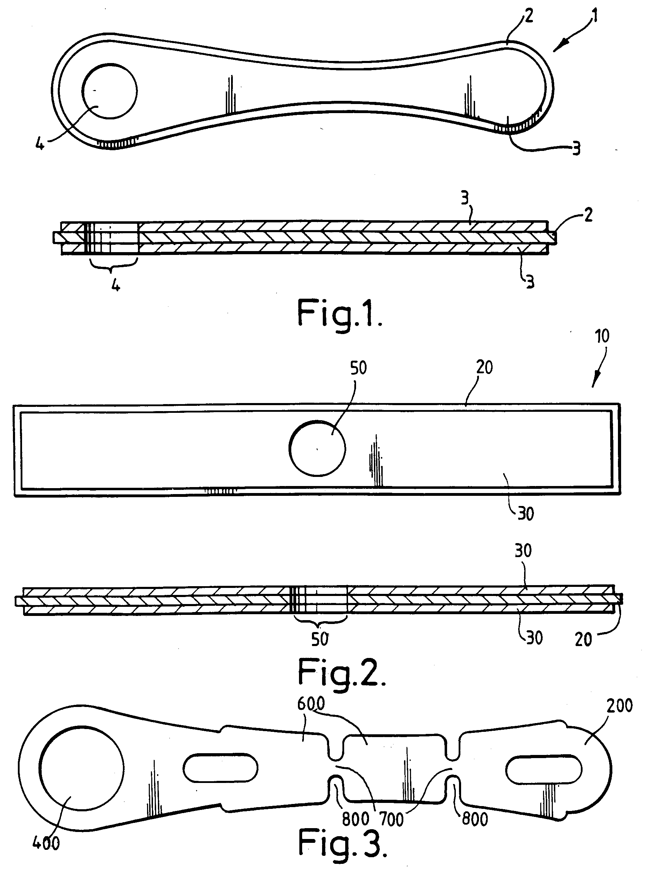

Embodiments of the present invention will now be described by way of example and with reference to the drawings in which Figure 1 shows a swingback blade according to a first embodiment of the invention in plan and in longitudinal section;
Figure 2 shows a bar blade according to a second embodiment of the invention in plan and in section;
Figure 3 shows a segmented blade layer according to another embodiment of the invention, and
Figure 4 is a perspective including partial sections of another swingback blade.

Referring to Figure 1 the cutting blade (1) is of the type which is attachable to a rotary lawn mower. The rotary lawn mower (not shown) comprises a motor and a drive line. At the end of the drive line, a rotatable driven component such as a disc, is connected for rotation with the drive line. The axis of rotation is generally perpendicular to the ground datum during use. Towards the periphery of the rotatable body a plurality of connection means serve to connect a cutting blade (1) thereto. In Figure 1, the cutting blade (1) has a hole (4) through which a connection means such as a bolt having a shank affording clearance with the hole (4) is used to connect the cutting blade (1) to the rotatable body. The cutting blade (1) is, therefore, pivotally mounted onto the rotatable body.

In operation, the motor turns the drive line which in turn drives the rotatable body. The rotational force applied to the cutting blade (1) pushes the cutting blade (1) into a generally radial position around the axis of rotation of the rotatable body.

The cutting blade (1) of the present invention is an elongate body with the blade mounting means (4) disposed towards one end of the body.

The cutting blade (1) is substantially flat and is of a composite or laminated structure with a cutting layer (2) and a support layer (3) disposed on each major side of the blade layer (2). The cutting layer (2) extends circumferentially outwardly from the support plates (3) as shown. The cutting layer (2) is thinner than a conventional cutting blade and therefore presents a relative sharp edge to grass and other vegetation during cutting. In order to support the cutting layer (1) a support layer (3) is bonded to each side of the cutting layer (2). The support plates (3) not only make the blade layer (2) more rigid, but also protect the cutting layer (2) from excessive wear, particularly where the cutting layer (1) collides with a hard object such as a stone. In addition, in the event that the cutting blade (1) fractures during use, fractured parts of the cutting blade are retained between the support layers (3).

This embodiment is not limited to two support layers (3) since one support plate (3) may in certain conditions be sufficient.

Figure 2 shows a composite or laminated bar blade (1) for a rotary mower of the type including a bar cutter blade which is rotatable around its mid-point. These mowers include a motor, a drive line driven by the motor and a cutter bar mounted for rotation with the drive line around an axis substantially perpendicular to the ground datum. Conventional cutter bars are constructed of a rectangular substantially flat metal sheet. Conventional cutter bars also have a mounting hole through the bar mid way down the bar. The motor drives the cutter bar to rotate about its mounting hole.

In Figure 2 there is shown a cutting layer (20) having a support layer (30) disposed on each side thereof. The cutting layer (10) includes a mounting hole (5) mid way along the length of the cutter blade (10). The cutting layer (20) extends beyond the edge of the support plate (30), particularly along the leading edge of the blade layer (20). The cutter blade of Figure 2 has the same advantages as described with reference to Figure 1.

Figure 3 shows a composite swingback cutter blade which is more flexible than the blades described above.

In this embodiment, the cutting layer (200) is segmented, each segment (600) joined to the next segment (600) by a link section (700). In effect the blade layer (200) has cut-outs (800) at different positions along the length of the cutting layer (200) and each cut-out (800) is substantially perpendicular to the edge of the cutting layer (200). The cutting layer (200) remains integral and unbroken for the complete length thereof.

The cutting layer (200) may have cut-outs (8) along one or both major edges.

When assembled, the cutter blade of Figure 3 comprises the segmented blade layer (200), and a support layer (not shown) disposed on each side thereof as mentioned previously in connection with the swingback blade of Figure 1.

A cutter blade having a segmented blade layer (200) is more flexible than a cutter blade which includes the non-segmented blade layer. A cutter blade which includes a segmented blade layer (200) will therefore be less likely to break or be damaged if it collides with a hard object.

Although a segmented cutter blade has been described as a "swingback" type cutter blade, the segmented blade layer could also be incorporated into a bar-type cutter blade.

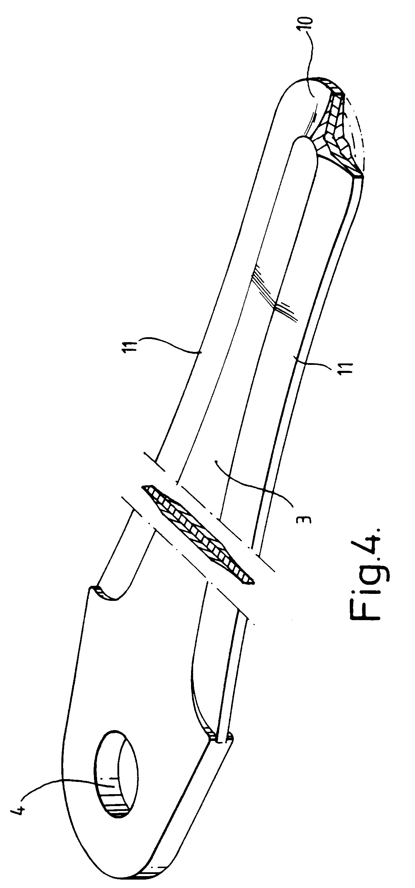

Figure 4 shows another laminated swingback blade and, using the same reference numbers as used in Figure 1, has a cutting layer (1), two support layers (3) and a through mounting hole 4. The blade of Figure 4 has a rounded tip 10 which merges with two concave cutting edges 11. The rounded tip 10 is widened locally at what, in use, is the point of maximum wear. It will be seen from the part sections included in Figure 4 that major edge regions of each support layer are slightly concave to assist, in use, support of the cutting edges.

## Claims

1. A laminated cutter blade comprising a cutting layer having at least one cutting edge and at least one support layer bonded to a major face of the cutting layer.

2. A laminated cutter blade comprising a cutting layer having at least one cutting edge and a support layer bonded to each major face of the cutting layer.

3. A cutter blade according to claim 1 or claim 2 wherein the cutting edge extends outwardly beyond a corresponding edge of the or each support layer.

4. A cutter blade according to claim 1 or claim 2 wherein the cutting edge is aligned with a corresponding edge or edges of the or each support layer.

5. A cutter blade according to claim 4 or claim 5 having an elongate form.

6. A cutter blade according to claim 6 wherein each corresponding edge of each support layer is reduced in thickness so as to reduce the total thickness of the blade in the region of the cutting edge.

7. A cutter blade according to claim 7 wherein each corresponding edge of each support layer is bevelled to reduce the thickness of each support layer in the region of the cutting edge.

8. A cutter blade according to claim 8 wherein each bevel is of concave form.

9. A cutter blade according to any one of claims 6 to 9 wherein the elongate blade is tapered with the cutting edge constituting a major edge portion thereof.

10. A cutter blade according to claim 9 including two cutting edges with each cutting edge constituting a major edge portion of the elongate tapered blade.

11. A cutter blade according to claim 10 including mounting means in that region of the tapered blade having maximum width.

12. A cutter blade according to claim 10 or claim 11 wherein the cutting layer includes a further cutting edge in that region of the blade of minimum width and constituting a blade tip, the said further cutting edge merging with each said cutting edge.

13. A cutter blade according to any one or more preceding claims wherein the cutting layer includes at least one aperture and wherein material from the or each support layer extends through each aperture to assist bonding between the cutting layer and each support layer.

14. A cutter blade according to any preceding claim wherein each cutting edge is concave when considered in plan view.

15. A cutter blade according to claim 14 as dependent on claim 12 wherein the further cutting edge is curved and constitutes, in plan, a bulbous shaped blade tip.

16. A cutter blade according to claim 15 including means for mounting the blade on a rotatable drive component of a grass cutting machine.

17. A cutter blade according to claim 16 wherein the means for mounting the blade on the rotatable drive component is an aperture extending through the cutting layer and each support layer.

18. A rotary lawn mower including at least one cutter blade according to any one of claims 1 to 17.

19. A rotary mower according to claim 18 including means for releasably attaching each blade to a rotatable drive component.

20. A rotary motor according to claim 19 wherein the means for releasably attaching each blade to the rotatable drive component permits angular displacement of each blade in a plane containing the blade.
